# EUROPEAN PATENT APPLICATION

(11) **EP 3 804 839 A1**
(43) Date of publication of application: **14.04.2021**
(21) Application number: 19834294.1
(22) Date of filing: 10.07.2019
(51) Int. Cl.: B01D 53/50, B01D 53/14, B01D 53/80, F23J 15/00, G06N 20/00, G05B 13/02

(54) **METHOD FOR CONTROLLING WET FLUE GAS DESULFURIZATION DEVICE, DEVICE FOR CONTROLLING WET FLUE GAS DESULFURIZATION DEVICE, AND REMOTE MONITORING SYSTEM COMPRISING DEVICE FOR CONTROLLING WET FLUE GAS DESULFURIZATION DEVICE**

(30) Priority: 13.07.2018 JP 2018133127
(71) Applicant: Mitsubishi Power, Ltd., Yokohama-shi, Kanagawa 220-8401 (JP)
(72) Inventor: SUDO, Jin, Yokohama-shi, Kanagawa 220-8401 (JP); KANEMORI, Shinya, Tokyo 108-8215 (JP); GUNJI, Shun, Yokohama-shi, Kanagawa 220-8401 (JP)
(74) Representative: Studio Torta S.p.A.
(86) International application number: PCT/JP2019/027308
(87) International publication number: WO 2020/013220

(57) **Abstract**

The method for controlling a wet flue gas desulfurization device according to the present invention includes: a step for constructing, with machine learning, a first learning model for the relationship between future sulfur dioxide concentration at an absorption tower outlet, and operation data for a combustion device and operation data including the circulation flow rate of an absorbing solution for a wet flue gas desulfurization device; a step for creating, using the first learning model, a first relational table of the circulation flow rate of the absorbing solution at a first time and sulfur dioxide concentration in the effluent gas flowing out from the absorption tower at a second time, which is a time further in the future than the first time; a step for determining, on the basis of the first relational table, the circulation flow rate of the absorbing solution at the first time so that the sulfur dioxide concentration in the effluent gas at the second time does not drop below a preset value; and a step for regulating operation conditions for at least one circulation pump on the basis of the determined circulation flow rate at the first time.

## Description

### TECHNICAL FIELD

The present disclosure relates to a method for controlling a wet flue gas desulfurization device, a device for controlling the wet flue gas desulfurization device, and a remote monitoring system comprising the device for controlling the wet flue gas desulfurization device.

### BACKGROUND

In a wet flue gas desulfurization device, an exhaust gas generated in a combustion device such as a boiler is introduced into an absorption tower of a desulfurization device and is brought into gas-liquid contact with an absorption liquid circulating through the absorption tower. In the course of the gas-liquid contact, sulfur dioxide (SO₂) in the exhaust gas is absorbed into the absorption liquid by reaction between SO₂ in the exhaust gas and an absorbent (for example, calcium carbonate) in the absorption liquid, removing SO₂ from the exhaust gas (desulfurizing the exhaust gas). On the other hand, the absorption liquid having absorbed SO₂ falls and is stored in a storage tank below the absorption tower. The absorbent is supplied to the storage tank. The absorption liquid whose absorption performance is recovered by the supplied absorbent is supplied to the upper part of the absorption tower by a circulation pump, and is brought into gas-liquid contact with the exhaust gas (absorption of SO₂). The circulation pump for circulating the absorption liquid consumes a lot of power. Thus, conventionally, in order to suppress power consumption, a required circulation flow rate of the absorption liquid is calculated based on, for example, the flow rate of the exhaust gas flowing into the absorption tower and the SO₂ concentration in the exhaust gas to control the number of circulation pumps in operation.

A wet flue gas desulfurization device of Patent Document 1 identifies the current desulfurization performance of a desulfurization device based on an operation model of the desulfurization device, obtains, from operation data of a combustion device and the desulfurization device and a load request signal of the combustion device, future operation data and a predictive value of a future SO₂ concentration in an exhaust gas flowing out of an absorption tower, and controls the circulation flow rate of an absorption liquid based on the predictive value of the future SO₂ concentration.

### Citation List

### Patent Literature

Patent Document 1: JP2984933B

### SUMMARY

### Technical Problem

However, in the wet flue gas desulfurization device of Patent Document 1, since the future operation data is predicted by linear regression from the load request signal of the combustion device, and the future SO₂ concentration is predicted from the future operation data, the problem arises in that prediction performance is low.

In view of the above, an object of at least one embodiment of the present disclosure is to provide a method for controlling a wet flue gas desulfurization device capable of appropriately adjusting an operation condition of a circulation pump for circulating an absorption liquid in an absorption tower of the wet flue gas desulfurization device, a device for controlling the wet flue gas desulfurization device, and a remote monitoring system comprising the device for controlling the wet flue gas desulfurization device.

### Solution to Problem

(1) A method for controlling a wet flue gas desulfurization device according to at least one embodiment of the present invention is a method for controlling a wet flue gas desulfurization device including an absorption tower, and at least one circulation pump for circulating an absorption liquid in the absorption tower, and performing desulfurization by bringing the absorption liquid into gas-liquid contact with an exhaust gas generated in a combustion device, in the absorption tower, the method including a step of constructing a first learning model by machine learning of a relationship between a future sulfur dioxide concentration at an outlet of the absorption tower, and operation data of the combustion device and operation data of the wet flue gas desulfurization device including a circulation flow rate of the absorption liquid, a step of creating, by using the first learning model, a first relationship table between a circulation flow rate of the absorption liquid at first time and a sulfur dioxide concentration in an effluent gas flowing out of the absorption tower at second time which is time in the future relative to the first time, a step of deciding, based on the first relationship table, the circulation flow rate of the absorption liquid at the first time, at which the sulfur dioxide concentration in the effluent gas at the second time is not more than a preset set value, and a step of adjusting an operation condition of the at least one circulation pump based on the decided circulation flow rate, at the first time.
   With the above method (1), the future sulfur dioxide concentration is predicted directly from the actual operation data, by creating the first relationship table between the circulation flow rate of the absorption liquid at the first time and the sulfur dioxide concentration in the effluent gas flowing out of the absorption tower at the second time which is the time in the future relative to the first time, from the operation data of the combustion device and the operation data of the wet flue gas desulfurization device including the circulation flow rate of the absorption liquid. Thus, it is possible to obtain the first relationship table improved in predictive performance of the future sulfur dioxide concentration. Based on the obtained first relationship table, the circulation flow rate of the absorption liquid at the first time at which the sulfur dioxide concentration in the effluent gas at the second time is not more than the preset set value is decided, and at the first time, the operation condition of the at least one circulation pump is adjusted based on the decided circulation flow rate. Thus, it is possible to appropriately adjust the operation condition of the circulation pump.
   Moreover, with the above method (1), since the first relationship table is created by using the first learning model constructed by machine learning of the relationship between the future sulfur dioxide concentration at the outlet of the absorption tower, and the operation data of the combustion device and the operation data of the wet flue gas desulfurization device including the circulation flow rate of the absorption liquid, it is possible to rapidly create the first relationship table.
(2) In some embodiments, in the above method (1), the operation data of the wet flue gas desulfurization device including the circulation flow rate of the absorption liquid includes a sulfur dioxide concentration in the effluent gas at any time, and a circulation flow rate of the absorption liquid at time in the past relative to the any time by a time interval obtained by subtracting the first time from the second time.
   With the above method (2), since the future sulfur dioxide concentration is predicted directly from the actual operation data including the sulfur dioxide concentration in the effluent gas at the any time and the circulation flow rate of the absorption liquid at the time in the past relative to the any time by the time interval obtained by subtracting the first time from the second time, it is possible to improve predictive performance of the future sulfur dioxide concentration.
(3) In some embodiments, in the above method (1) or (2), the wet flue gas desulfurization device further includes a gas analyzer for measuring the sulfur dioxide concentration in the effluent gas, and the method further includes a step of comparing an analysis result by the gas analyzer acquired at the second time with a predictive value of the sulfur dioxide concentration in the effluent gas at the second time.
   With the above method (3), some sort of abnormality may be occurring in a process, if the analysis result by the gas analyzer significantly deviates from the predictive value of the sulfur dioxide concentration. Thus, it is possible to early detect the abnormality in the process.
(4) In some embodiments, in the above method (3), the method for controlling the wet flue gas desulfurization device further includes, after creating the first relationship table, a step of reconstructing, based on a difference between the analysis result and the predictive value of the sulfur dioxide concentration in the effluent gas, the first learning model by machine learning of the relationship between the future sulfur dioxide concentration at the outlet of the absorption tower, and the operation data of the combustion device and the operation data of the wet flue gas desulfurization device including the circulation flow rate of the absorption liquid, and creating the first relationship table by using the reconstructed first learning model.
   With the above method (4), if the difference between the analysis result by the gas analyzer and the predictive value of the sulfur dioxide concentration in the effluent gas is large, the first learning model is recreated by machine learning from the operation data of the combustion device and the operation data of the wet flue gas desulfurization device including the circulation flow rate of the absorption liquid, and the first relationship table is recreated by using the reconstructed first learning model, thereby it is possible to obtain the first relationship table further improved in predictive performance of the future sulfur dioxide concentration.
(5) In some embodiments, in any one of the above methods (1) to (4), the wet flue gas desulfurization device further includes an absorbent slurry supply part for supplying, to the absorption tower, an absorbent slurry which is a slurry of an absorbent included in the absorption liquid, and the method further includes a step of constructing a second learning model by machine learning of a relationship between a future absorbent concentration, and the operation data of the combustion device and the operation data of the wet flue gas desulfurization device including the circulation flow rate of the absorption liquid, a step of creating, by using the second learning model, a second relationship table between a supply amount of the absorbent slurry to the absorption tower at third time and a concentration of the absorbent in the absorption liquid at fourth time which is time in future relative to the third time, a step of deciding, based on the second relationship table, the supply amount of the absorbent slurry at the third time, in which the concentration of the absorbent at the fourth time falls within a preset setting range, and a step of controlling the absorbent slurry supply part based on the decided supply amount of the absorbent slurry, at the third time.
   With the above method (5), the future absorbent concentration is predicted directly from the actual operation data, by creating the second relationship table between the supply amount of the absorbent slurry to the absorption tower at the third time and the concentration of the absorbent in the absorption liquid at the fourth time which is the time in the future relative to the third time, from the operation data of the combustion device and the operation data of the wet flue gas desulfurization device including the circulation flow rate of the absorption liquid. Thus, it is possible to obtain the second relationship table improved in predictive performance of the future absorbent concentration. Based on the obtained second relationship table, the supply amount of the absorbent slurry at the third time in which the absorbent concentration at the fourth time falls within the preset setting range is decided, and at the third time, the absorbent slurry supply part is controlled based on the decided supply amount of the absorbent slurry, thereby it is possible to suppress a fluctuation in absorbent concentration. Thus, it is possible to suppress excessive consumption of the absorbent, and to circulate the absorption liquid at an appropriate circulation flow rate.
   Moreover, with the above method (5), since the second relationship table is created by using the second learning model constructed by machine learning of the relationship between the future absorbent concentration, and the operation data of the combustion device and the operation data of the wet flue gas desulfurization device including the circulation flow rate of the absorption liquid, it is possible to rapidly create the second relationship table.
(6) In some embodiments, in the above method (5), the operation data of the wet flue gas desulfurization device including the circulation flow rate of the absorption liquid includes a concentration of the absorbent at any time, and a supply amount of the absorbent slurry at time in the past relative to the any time by a time interval obtained by subtracting the third time from the fourth time.
   With the above method (6), since the future absorbent concentration is predicted directly from the actual operation data including the absorbent concentration at the any time and the supply amount of the absorbent slurry at the time in the past relative to the any time by the time interval obtained by subtracting the third time from the fourth time, it is possible to improve predictive performance of the future absorbent concentration.
(7) In some embodiments, in the above method (6), the concentration of the absorbent is calculated with a simulation model by mass balance calculation.
   A sensor for detecting the absorbent concentration is generally expensive. Thus, providing such a sensor increases the cost of the wet flue gas desulfurization device. However, with the above method (7), since the absorbent concentration can be calculated with the simulation model by mass balance calculation, the expensive sensor is no longer needed, making it possible to suppress the increase in cost of the wet flue gas desulfurization device.
(8) In some embodiments, in any one of the above methods (5) to (7), an interval from the third time to the fourth time is shorter than an interval from the first time to the second time.
   The change in sulfur dioxide concentration in the effluent gas undergoes a plurality of steps in order of an increase in circulation flow rate of the absorption liquid, gas-liquid contact with the exhaust gas, and a decrease in sulfur dioxide concentration. On the other hand, the change in absorbent concentration has the small number of required steps in order of supply of the absorbent slurry and an increase in absorbent concentration. Accordingly, a delay in control of the sulfur dioxide concentration is large, as compared with control of the absorbent concentration. However, with the above method (8), since the time from the third time to the fourth time is shorter than the time from the first time to the second time, it is possible to appropriately consider an influence of the control delay. Thus, it is possible to further improve predictive performance of the future absorbent concentration.
(9) A device for controlling a wet flue gas desulfurization device according to at least one embodiment of the present invention is a device for controlling a wet flue gas desulfurization device including an absorption tower, and at least one circulation pump for circulating an absorption liquid in the absorption tower, and performing desulfurization by bringing the absorption liquid into gas-liquid contact with an exhaust gas generated in a combustion device, in the absorption tower, the device including a first learning model construction unit for constructing a learning model by machine learning of a relationship between a future sulfur dioxide concentration at an outlet of the absorption tower, and operation data of the combustion device and operation data of the wet flue gas desulfurization device including a circulation flow rate of the absorption liquid, a first relationship table creation unit for creating, by using the learning model, a first relationship table between a circulation flow rate of the absorption liquid at first time and a sulfur dioxide concentration in an effluent gas flowing out of the absorption tower at second time which is time in the future relative to the first time, a circulation flow rate decision unit for deciding, based on the first relationship table, the circulation flow rate of the absorption liquid at the first time, at which the sulfur dioxide concentration in the effluent gas at the second time is not more than a preset set value, and a circulation pump adjustment unit for adjusting an operation condition of the at least one circulation pump based on the decided circulation flow rate, at the first time.
   With the above configuration (9), the future sulfur dioxide concentration is predicted directly from the actual operation data, by creating the first relationship table between the circulation flow rate of the absorption liquid at the first time and the sulfur dioxide concentration in the effluent gas flowing out of the absorption tower at the second time which is the time in the future relative to the first time, from the operation data of the combustion device and the operation data of the wet flue gas desulfurization device including the circulation flow rate of the absorption liquid. Thus, it is possible to obtain the first relationship table improved in predictive performance of the future sulfur dioxide concentration. Based on the obtained first relationship table, the circulation flow rate of the absorption liquid at the first time at which the sulfur dioxide concentration in the effluent gas at the second time is not more than the preset set value is decided, and at the first time, the operation condition of the at least one circulation pump is adjusted based on the decided circulation flow rate. Thus, it is possible to appropriately adjust the operation condition of the circulation pump.
(10) In some embodiments, in the above configuration (9), the wet flue gas desulfurization device further includes an absorbent slurry supply part for supplying, to the absorption tower, an absorbent slurry which is a slurry of an absorbent included in the absorption liquid, and the device further includes: a second learning model construction unit for constructing a second learning model by machine learning of a relationship between a future absorbent concentration, and the operation data of the combustion device and the operation data of the wet flue gas desulfurization device including the circulation flow rate of the absorption liquid, a second relationship table creation unit for creating, by using the second learning model, a second relationship table between a supply amount of the absorbent slurry to the absorption tower at third time and a concentration of the absorbent in the absorption liquid at fourth time which is time in future relative to the third time, an absorbent slurry supply amount decision unit for deciding, based on the second relationship table, the supply amount of the absorbent slurry at the third time, in which the concentration of the absorbent at the fourth time falls within a preset setting range, and an absorbent slurry supply control unit for controlling the absorbent slurry supply part based on the decided supply amount of the absorbent slurry, at the third time.
   With the above configuration (10), the future absorbent concentration is predicted directly from the actual operation data, by creating the second relationship table between the supply amount of the absorbent slurry to the absorption tower at the third time and the concentration of the absorbent in the absorption liquid at the fourth time which is the time in the future relative to the third time, from the operation data of the combustion device and the operation data of the wet flue gas desulfurization device including the circulation flow rate of the absorption liquid. Thus, it is possible to obtain the second relationship table improved in predictive performance of the future absorbent concentration. Based on the obtained second relationship table, the supply amount of the absorbent slurry at the third time in which the absorbent concentration at the fourth time falls within the preset setting range is decided, and at the third time, the absorbent slurry supply part is controlled based on the decided supply amount of the absorbent slurry, thereby it is possible to suppress a fluctuation in absorbent concentration. Thus, it is possible to suppress excessive consumption of the absorbent, and to circulate the absorption liquid at an appropriate circulation flow rate.
(11) A remote monitoring system according to at least one embodiment of the present invention includes the device for controlling the wet flue gas desulfurization device according to any one of the above configuration (9) or (10), and a remote monitoring device electrically connected to the device for controlling the wet flue gas desulfurization device.

With the above configuration (11), it is possible to monitor a control state of the wet flue gas desulfurization device.

### Advantageous Effects

According to at least one embodiment of the present disclosure, a future sulfur dioxide concentration is predicted directly from actual operation data, by creating a first relationship table between a circulation flow rate of an absorption liquid at first time and a sulfur dioxide concentration in an effluent gas flowing out of an absorption tower at second time which is time in the future relative to the first time, from operation data of a combustion device and operation data of a wet flue gas desulfurization device including a circulation flow rate of the absorption liquid. Thus, it is possible to obtain a first relationship table improved in predictive performance of the future sulfur dioxide concentration. Based on the obtained first relationship table, the circulation flow rate of the absorption liquid at the first time at which the sulfur dioxide concentration in the effluent gas at the second time is not more than a preset set value is decided, and at the first time, an operation condition of at least one circulation pump is adjusted based on the decided circulation flow rate. Thus, it is possible to appropriately adjust the operation condition of the circulation pump.

### BRIEF DESCRIPTION OF DRAWINGS

FIG. 1 is a schematic diagram showing the configuration of a wet flue gas desulfurization device including a device for controlling the wet flue gas desulfurization device according to an embodiment of the present disclosure.
FIG. 2 is a schematic diagram showing the configuration of a remote monitoring system according to an embodiment of the present disclosure.
FIG. 3 is a flowchart of a method for controlling the wet flue gas desulfurization device according to an embodiment of the present disclosure.
FIG. 4 is a graph showing respective transitions of a predictive value of an SO₂ concentration in an effluent gas, a measurement value of the SO₂ concentration by a gas analyzer, and a true value of a predictive value of the SO₂ concentration.
FIG. 5 is a graph schematically showing an example of a first relationship table created in the method for controlling the wet flue gas desulfurization device according to an embodiment of the present disclosure.
FIG. 6 is a graph schematically showing an example of a second relationship table created in the method for controlling the wet flue gas desulfurization device according to an embodiment of the present disclosure.
FIG. 7 is a schematic diagram showing the configuration of a modified example of the device for controlling the wet flue gas desulfurization device according to an embodiment of the present disclosure.

### DETAILED DESCRIPTION

Embodiments of the present invention will now be described in detail with reference to the accompanying drawings. However, the scope of the present invention is not limited to the following embodiments. It is intended that dimensions, materials, shapes, relative positions and the like of components described in the embodiments shall be interpreted as illustrative only and not intended to limit the scope of the present invention.

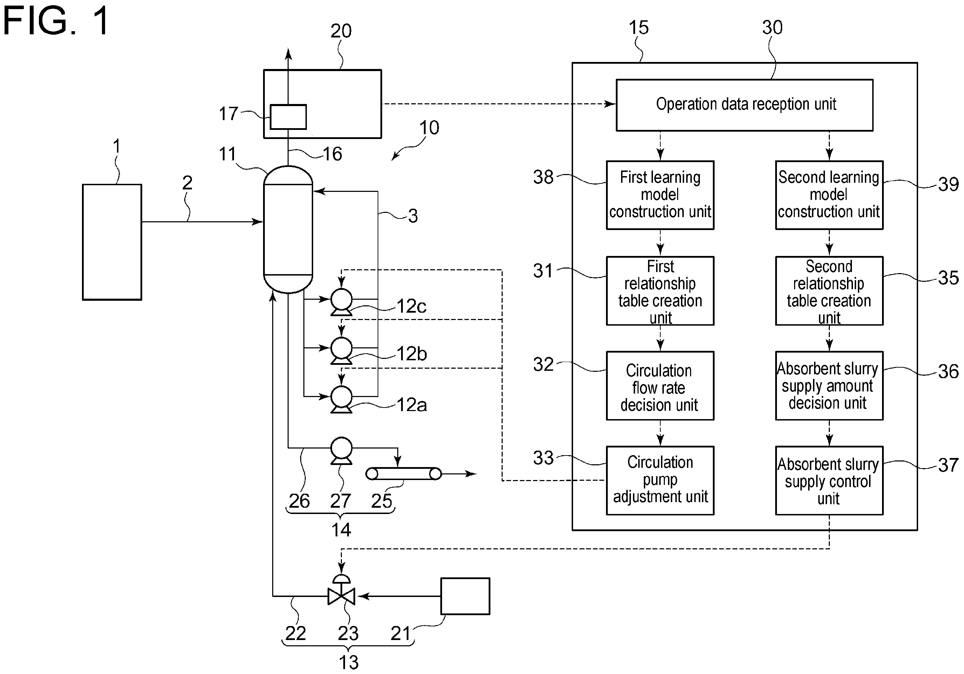

As shown in FIG. 1, a wet flue gas desulfurization device 10 is provided to desulfurize an exhaust gas generated in a combustion device 1 such as a boiler. The wet flue gas desulfurization device 10 includes an absorption tower 11 communicating with the combustion device 1 via a pipe 2, a plurality of (for example, three) circulation pumps 12a, 12b, 12c disposed on a circulation pipe 3 for an absorption liquid circulating in the absorption tower 11, an absorbent slurry supply part 13 for supplying, to the absorption tower 11, a slurry (absorbent slurry) of calcium carbonate (CaCO₃) serving as an absorbent included in the absorption liquid, and a gypsum recovery part 14 for recovering gypsum in the absorption liquid. The absorption tower 11 is provided with an outflow pipe 16 for the exhaust gas desulfurized by an operation to be described later to flow out of the absorption tower 11 as the effluent gas. The outflow pipe 16 is provided with a gas analyzer 17 for measuring the SO₂ concentration in the effluent gas.

The absorbent slurry supply part 13 includes an absorbent slurry production equipment 21 for producing the absorbent slurry, an absorbent slurry supply pipe 22 for causing the absorbent slurry production equipment 21 and the absorption tower 11 to communicate with each other, and an absorbent slurry supply amount control valve 23 for controlling the flow rate of the absorbent slurry flowing through the absorbent slurry supply pipe 22. The gypsum recovery part 14 includes a gypsum separator 25, a gypsum slurry extraction pipe 26 for causing the gypsum separator 25 and the absorption tower 11 to communicate with each other, and a gypsum slurry extraction pump 27 disposed on the gypsum slurry extraction pipe 26.

The wet flue gas desulfurization device 10 is provided with a control device 15 of the wet flue gas desulfurization device 10. The control device 15 includes an operation data reception unit 30 electrically connected to an operation data acquisition unit 20, which includes various detectors for acquiring various kinds of operation data (for example, temperatures and pressures in various sections, flow rates of various fluids, and the like) of the combustion device 1 and the wet flue gas desulfurization device 10. The operation data acquisition unit 20 includes the gas analyzer 17.

The control device 15 includes a first learning model construction unit 38 electrically connected to the operation data reception unit 30, a first relationship table creation unit 31 electrically connected to the first learning model construction unit 38, a circulation flow rate decision unit 32 electrically connected to the first relationship table creation unit 31, and a circulation pump adjustment unit 33 electrically connected to the circulation flow rate decision unit 32. The circulation pump adjustment unit 33 is electrically connected to the circulation pumps 12a, 12b, 12c.

The control device 15 further includes a second learning model construction unit 39 electrically connected to the operation data reception unit 30, a second relationship table creation unit 35 electrically connected to the second learning model construction unit 39, an absorbent slurry supply amount decision unit 36 electrically connected to the second relationship table creation unit 35, and an absorbent slurry supply control unit 37 electrically connected to the absorbent slurry supply amount decision unit 36. The absorbent slurry supply control unit 37 is electrically connected to the absorbent slurry supply amount control valve 23.

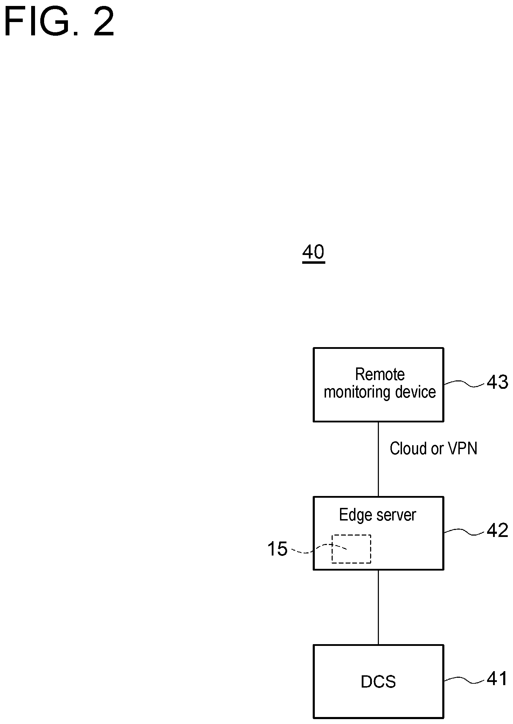

FIG. 2 shows the configuration of a remote monitoring system 40 for remotely monitoring a control state of the wet flue gas desulfurization device 10 (see FIG. 1). The remote monitoring system 40 includes a distributed control system (DCS) 41 for the respective devices composing the combustion device 1 (see FIG. 1) and the wet flue gas desulfurization device (see FIG. 1), an edge server 42 electrically connected to the DCS 41 and equipped with the control device 15, and a remote monitoring device 43 such as a desktop personal computer or a tablet computer electrically connected to the edge server 42 via cloud or the virtual private network (VPN). In general, it is possible to remotely monitor the control state of the wet flue gas desulfurization device 10 by the remote monitoring device 43 present in a location away from the edge server 42.

Next, an operation in which the wet flue gas desulfurization device 10 desulfurizes the exhaust gas generated in the combustion device 1 will be described.

As shown in FIG. 1, the exhaust gas generated in the combustion device 1 flows through the pipe 2, flows into the absorption tower 11, and rises in the absorption tower 11. Operating at least one of the circulation pumps 12a to 12c, the absorption liquid flows through the circulation pipe 3, flows into the absorption tower 11, and flows down in the absorption tower 11. The absorption liquid flowing down in the absorption tower 11 is stored in the absorption tower 11, flows out of the absorption tower 11 by the circulation pumps 12a to 12c, and flows through the circulation pipe 3. The absorption liquid thus circulates in the absorption tower 11.

In the absorption tower 11, the rising exhaust gas and the flow-down absorption liquid are brought into gas-liquid contact with each other. SO₂ contained in the exhaust gas reacts with CaCO₃ in the absorption liquid, precipitating gypsum (CaSO₄·2H20) in the absorption liquid, as indicated by the following reaction formula:

SO₂+CaCO₃+2H₂O+1/2O₂→CaSO₄·2H₂O+CO₂

Since a part of SO₂ in the exhaust gas is thus removed as gypsum into the absorption liquid, that is, the exhaust gas is desulfurized, the SO₂ concentration in the effluent gas flowing out of the absorption tower 11 via the outflow pipe 16 is lower than the SO₂ concentration in the exhaust gas flowing into the absorption tower 11 via the pipe 2. The effluent gas flowing out of the absorption tower 11 flows through the outflow pipe 16 and is released to the atmosphere, in the middle of which the gas analyzer 17 measures the SO₂ concentration, and the measurement result is transmitted to the operation data reception unit 30 of the control device 15.

The SO₂ concentration in the effluent gas tends to decrease as the circulation flow rate of the absorption liquid circulating in the absorption tower 11 increases, unless a CaCO₃ concentration in the absorption liquid fluctuates greatly. Controlling the circulation flow rate by controlling the number of circulation pumps 12a to 12c in operation by the control device 15 with a control method to be described later, it is possible to control the SO₂ concentration in the effluent gas, for example, it is possible to control the SO₂ concentration in the effluent gas to be not more than a preset set value.

The gypsum precipitated in the absorption liquid in the absorption tower 11 is extracted from the absorption tower 11 by the gypsum slurry extraction pump 27 as the gypsum slurry. The gypsum slurry flows through the gypsum slurry extraction pipe 26 and flows into the gypsum separator 25. The gypsum and water are separated from each other in the gypsum separator 25. The gypsum is recovered, and the water is sent to a drainage facility (not shown).

CaCO₃ in the absorption liquid reacts with SO₂ to be gypsum, decreasing the CaCO₃ concentration in the absorption liquid as the exhaust gas is desulfurized. With the control method to be described later, the control device 15 controls the opening degree of the absorbent slurry supply amount control valve 23, and supplies the absorbent slurry produced in the absorbent slurry production equipment 21 into the absorption tower 11 via the absorbent slurry supply pipe 22. Thus, the CaCO₃ concentration in the absorption liquid falls within a preset setting range, suppressing a large fluctuation in CaCO₃ concentration during desulfurization of the exhaust gas.

Next, the method for controlling the wet flue gas desulfurization device 10 by the control device 15 will be described.

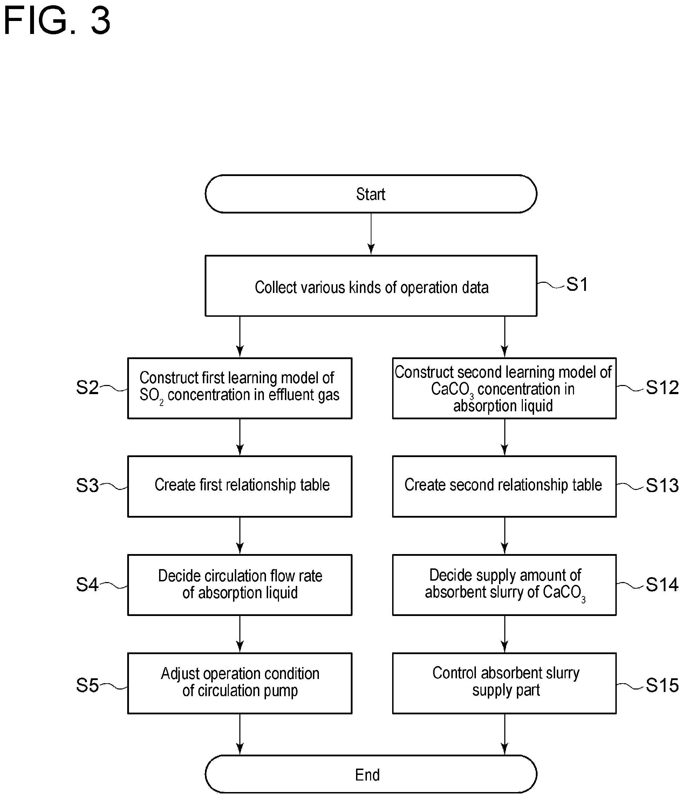

FIG. 3 shows the outline of the method for controlling the wet flue gas desulfurization device 10 by the control device 15. The various kinds of operation data of the combustion device 1 and the wet flue gas desulfurization device 10 are collected in step S1. Then, in step S2, a first learning model is constructed by machine learning of the relationship between the various kinds of operation data and a future SO₂ concentration in the effluent gas flowing out of the absorption tower 11. Next, in step S3, a first relationship table to be described later is created by using the constructed first learning model. In subsequent step S4, a circulation flow rate of the absorption liquid, at which the SO₂ concentration in the effluent gas is not more than the preset set value, is decided based on the first relationship table. In step S5, operation conditions of the circulation pumps 12a to 12c are adjusted based on the decided circulation flow rate. Thus, the SO₂ concentration in the effluent gas is controlled to be not more than the preset set value.

Moreover, after step S1, besides steps S2 to S5, in step S12, a second learning model is constructed by machine learning of the relationship between the various kinds of operation data and a future CaCO₃ concentration in absorption liquid. Next, in step S13, a second relationship table to be described later is created by using the constructed second learning model. In subsequent step S14, an absorbent slurry supply amount, in which the CaCO₃ concentration falls within a preset setting range, is decided based on the second relationship table. In step S15, controlling the absorbent slurry supply part 13, that is, controlling the opening degree of the absorbent slurry supply amount control valve 23, the absorbent slurry is supplied into the absorption tower 11 by the decided supply amount. Thus, the CaCO₃ concentration in the absorption liquid falls within the preset setting range, suppressing a large fluctuation in CaCO₃ concentration during desulfurization of the exhaust gas.

Next, the respective steps of the method for controlling the wet flue gas desulfurization device 10 by the control device 15 will be described in detail.

In step S1, as shown in FIG. 1, the operation data acquisition unit 20 acquires the various kinds of operation data of the combustion device 1 and the wet flue gas desulfurization device 10, and then the acquired various kinds of operation data are transmitted to the control device 15 to be received by the operation data reception unit 30, allowing the control device 15 to collect the various kinds of operation data. As described above, since the operation data acquisition unit 20 includes the gas analyzer 17, the various kinds of operation data include the SO₂ concentration in the effluent gas.

In step S2, the first learning model construction unit 38 constructs the first model by machine learning of the relationship between the various kinds of operations collected by the control device 15 and the future SO₂ concentration in the effluent gas. In step S3, using the constructed first learning model, the first relationship table creation unit 31 creates the first relationship table indicating correlation between a circulation flow rate of the absorption liquid at first time and a predictive value of the SO₂ concentration in the effluent gas at second time which is time in the future relative to the first time. Since the first relationship table is created by using the first learning model constructed by machine learning, it is possible to rapidly create the first relationship table.

In the first relationship table, provided that the circulation flow rate of the absorption liquid and the predictive value of the SO₂ concentration in the effluent gas are different in time and the circulation flow rate of the absorption liquid is set to a current value, the predictive value of the SO₂ concentration in the effluent gas is, for example, a predictive value of the SO₂ concentration a few minutes later from now. Thus, the various kinds of operation data at least include the SO₂ concentration in the effluent gas at any time and the circulation flow rate of the absorption liquid at time in the past relative to the any time by a time interval obtained by subtracting the first time from the second time. The future SO₂ concentration is predicted directly from the actual operation data including the SO₂ concentration in the effluent gas at the any time and the circulation flow rate of the absorption liquid at time in the past relative to the any time by the time interval obtained by subtracting the first time from the second time, making it possible to improve predictive performance of the future SO₂ concentration. The predictive performance of the future SO₂ concentration improves, as the interval between the first time and the second time is short. Thus, the interval between the first time and the second time is preferably the sum of a time taken until the SO₂ concentration in the effluent gas changes due to a change in circulation flow rate of the absorption liquid and a time required for the gas analyzer 17 to measure the SO₂ concentration.

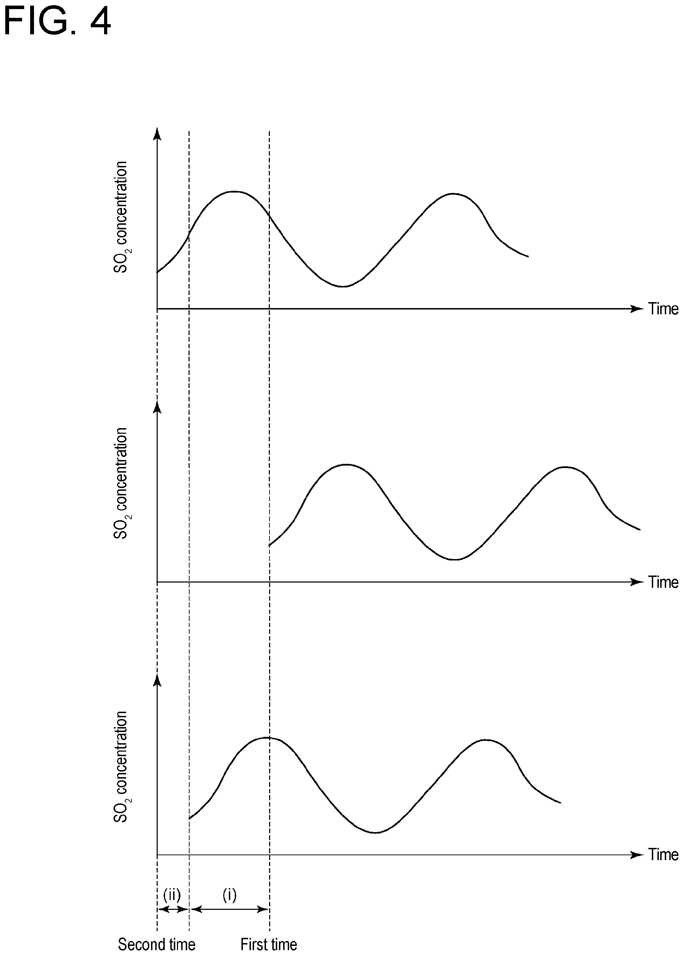

FIG. 4 shows a transition of the predictive value of the SO₂ concentration (top graph), a transition of the measurement value of the SO₂ concentration by the gas analyzer 17 (middle graph), and a transition of the true value of the SO₂ concentration (bottom graph), in the case in which the interval between the first time and the second time is the sum of the time taken until the SO₂ concentration in the effluent gas changes due to the change in circulation flow rate of the absorption liquid and the time required for the gas analyzer 17 to measure the SO₂ concentration. In each of the graphs, a value is older toward the right side, and the latest value is given at the leftmost side. The latest value of the measurement value of the SO₂ concentration by the gas analyzer 17 is a value at the first time, and the latest value of the predictive value of the SO₂ concentration is a value at the second time. An interval (i) between the latest value of the measurement value of the SO₂ concentration by the gas analyzer 17 and the latest value of the true value of the SO₂ concentration corresponds to the time required for the gas analyzer 17 to measure the SO₂ concentration, that is, a measurement delay. An interval (ii) between the latest value of the true value of the SO₂ concentration and the latest value of the predictive value of the SO₂ concentration corresponds to the time taken until the SO₂ concentration in the effluent gas changes due to the change in circulation flow rate of the absorption liquid.

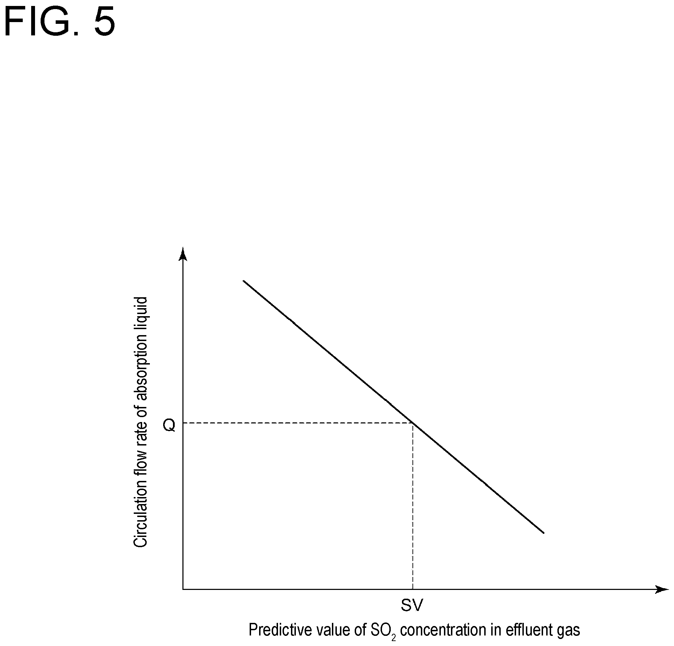

FIG. 5 shows an example of the first relationship table. In the present embodiment, the first relationship table is represented as a graph having the predictive value of the SO₂ concentration in the effluent gas on the abscissa and the circulation flow rate of the absorption liquid on the ordinate. However, the first relationship table need not necessarily be in such a form, but may be in a form of a matrix, a mathematical expression, or the like. In step S4, the circulation flow rate decision unit 32 decides, based on the first relationship table, a circulation flow rate Q of the absorption liquid at which the future SO₂ concentration in the effluent gas reaches a preset set value SV.

In step S5, as shown in FIG. 1, the circulation pump adjustment unit 33 decides the number of circulation pumps 12a to 12c in operation to be not less than the decided circulation flow rate Q, and causes the decided number of circulation pumps to operate. For example, in a case in which supply amounts when the three circulation pumps 12a to 12c operate, respectively, are the same, the circulation flow rate can be adjusted at three steps. It is possible to adjust the circulation flow rate more finely, as the number of circulation pumps increases. In addition, for example, in a case in which the supply amounts when the three circulation pumps 12a to 12c operate, respectively, are different from each other, the circulation flow rate can be adjusted at up to six steps by the combination of the circulation pumps to be operated. Furthermore, for example, if each of the three circulation pumps 12a to 12c can adjust the supply amount, the circulation flow rate can be adjusted more finely.

Note that adjustment of the circulation flow rate is not limited to be performed by controlling the number of circulation pumps. The supply amount of the circulation pump may be adjusted to obtain the circulation flow rate decided by the circulation flow rate decision unit 32, by using one circulation pump capable of adjusting the supply amount.

Thus adjusting the circulation flow rate of the absorption liquid circulating in the absorption tower 11, it is possible to control the future SO₂ concentration in the effluent gas to be not more than the preset set value. However, this requires that there is no large fluctuation in CaCO₃ concentration in the absorption liquid. Accordingly, in the present embodiment, as described above, besides steps S2 to S5, in steps S12 to S15, the CaCO₃ concentration in the absorption liquid is controlled to fall within the preset setting range. Next, each of steps S12 to S15 will be described in detail.

In step S12, the second learning model construction unit 39 constructs the second learning model by machine learning of the relationship between the various kinds of operation data collected by the control device 15 and the future CaCO₃ concentration in the absorption liquid in the absorption tower 11. In step S13, using the constructed second learning model, the second relationship table creation unit 35 creates the second relationship table indicating correlation between a supply amount of the absorbent slurry to the absorption tower 11 at third time and a predictive value of the CaCO₃ concentration at fourth time which is time in the future relative to the third time. Since the second relationship table is created by using the second learning model constructed by machine learning, it is possible to rapidly create the second relationship table.

In the second relationship table, provided that the supply amount of the absorbent slurry to the absorption tower 11 and the predictive value of the CaCO₃ concentration are different in time and the supply amount of the absorbent slurry is set to a current value, the predictive value of the CaCO₃ concentration is, for example, a predictive value of the CaCO₃ concentration a few minutes later from now. Thus, the various kinds of operation data at least include the CaCO₃ concentration at any time and the supply amount of the absorbent slurry at time in the past relative to the any time by a time interval obtained by subtracting the third time from the fourth time. The future CaCO₃ concentration is predicted directly from the actual operation data including the CaCO₃ concentration at the any time and the supply amount of the absorbent slurry at the time in the past relative to the any time by the time interval obtained by subtracting the third time from the fourth time, making it possible to improve predictive performance of the future CaCO₃ concentration.

In the present embodiment, the CaCO₃ concentration at the any time uses a value calculated with a simulation model by mass balance calculation. A sensor for detecting the CaCO₃ concentration is generally expensive. Thus, providing such a sensor increases the cost of the wet flue gas desulfurization device 10. However, if the CaCO₃ concentration is calculated with the simulation model by mass balance calculation, the expensive sensor is no longer needed, making it possible to suppress the increase in cost of the wet flue gas desulfurization device 10.

The predictive performance of the future CaCO₃ concentration improves, as the interval between the third time and the fourth time is short. Thus, the interval between the third time and the fourth time is preferably a time taken until the CaCO₃ concentration changes due to a change in supply amount of the absorbent slurry. A transition of the predictive value of the supply amount of the absorbent slurry and the transition of the true value are in the same relationship as the transition of the predictive value of the SO₂ concentration (top graph) and the transition of the true value (bottom graph) in FIG. 4, respectively. In the present embodiment, the CaCO₃ concentration is calculated with the simulation model by mass balance calculation. However, in a case in which the CaCO₃ concentration is measured by a sensor, the transition of the predictive value of the supply amount of the absorbent slurry, the transition of the measurement value by the sensor, and the transition of the true value are in the same relationship as the various transitions (respective graphs) of the SO₂ concentration in FIG. 4, respectively.

In general, the number of steps required for the SO₂ concentration in the effluent gas flowing out of the absorption tower 11 to change is larger than the number of steps required for the CaCO₃ concentration to change. Thus, a delay in control of the SO₂ concentration is long, as compared with control of the CaCO₃ concentration. Thus, making the time from the third time to the fourth time shorter than the time from the first time to the second time, it is possible to appropriately consider an influence of the control delay. Accordingly, it is possible to further improve predictive performance of the future CaCO₃ concentration.

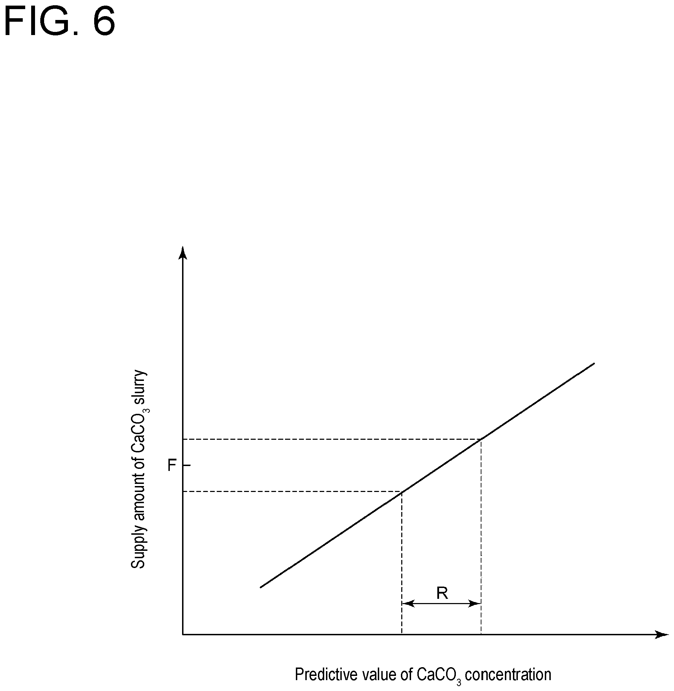

FIG. 6 shows an example of the second relationship table. In the present embodiment, the second relationship table is represented as a graph having the predictive value of the CaCO₃ concentration on the abscissa and the supply amount of the absorbent slurry on the ordinate. However, the second relationship table need not necessarily be in such a form, but may be in a form of a matrix, a mathematical expression, or the like. In step S14, the absorbent slurry supply amount decision unit 36 decides, based on the second relationship table, a supply amount F of the absorbent slurry in which the future CaCO₃ concentration falls within the preset setting range R.

In step S15, as shown in FIG. 1, the absorbent slurry supply control unit 37 controls the opening degree of the absorbent slurry supply amount control valve 23 such that the supply amount of the absorbent slurry supplied into the absorption tower 11 via the absorbent slurry supply pipe 22 is close to the decided supply amount F of the absorbent slurry. Thus adjusting the supply amount of the absorbent slurry to the absorption tower 11, it is possible to control the future CaCO₃ concentration to fall within the preset setting range.

As described above, the future SO₂ concentration is predicted directly from the actual operation data, by creating the first relationship table between the circulation flow rate of the absorption liquid at the first time and the SO₂ concentration in the effluent gas flowing out of the absorption tower 11 at the second time which is the time in the future relative to the first time, from the operation data of the combustion device 1 and the operation data of the wet flue gas desulfurization device 10 including the circulation flow rate of the absorption liquid. Thus, it is possible to obtain the first relationship table improved in predictive performance of the future SO₂ concentration. Based on the obtained first relationship table, the circulation flow rate of the absorption liquid at the first time at which the SO₂ concentration in the effluent gas at the second time is not more than the preset set value is decided, and at the first time, the operation conditions of the circulation pumps 12a to 12c are adjusted based on the decided circulation flow rate. Thus, it is possible to appropriately adjust the operation conditions of the circulation pumps 12a to 12c.

In the present embodiment, the CaCO₃ concentration in the absorption liquid is set within the preset setting range by steps S12 to S15. However, it is possible to eliminate the need for respective steps S12 to S15, if, for example, the CaCO₃ concentration in the absorption liquid is actually measured by a sensor, and the supply amount of the absorbent slurry to the absorption tower 11 is adjusted as needed based on the actual measurement value. In this case, the control device 15 may not include the second learning model construction unit 39, the second relationship table creation unit 35, the absorbent slurry supply amount decision unit 36, and the absorbent slurry supply control unit 37.

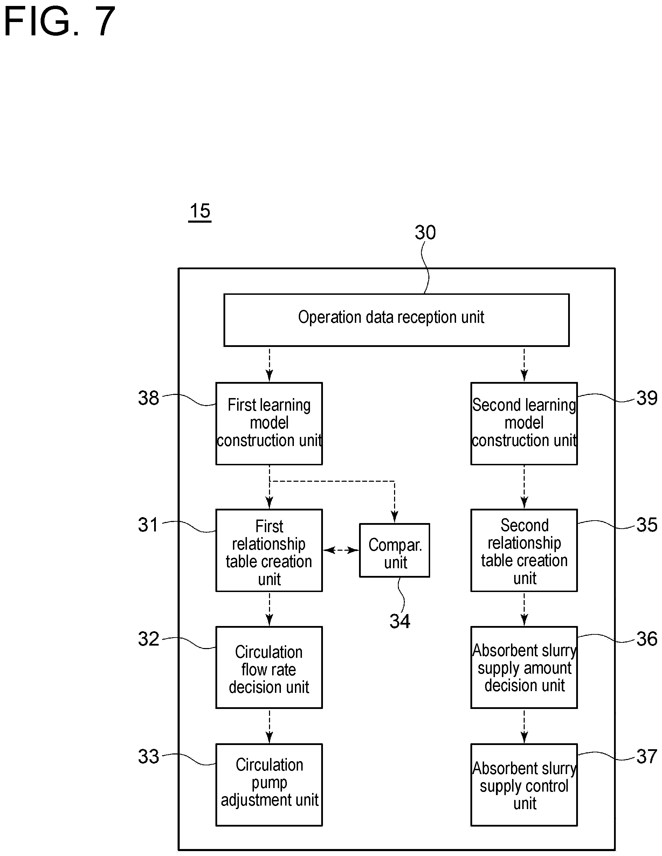

As shown in FIG. 7, the control device 15 includes a comparison unit 34 electrically connected to the operation data reception unit 30 and the first relationship table creation unit 31. The comparison unit 34 may reconstruct the first learning model by machine learning of the various operation data and the future SO₂ concentration in the effluent gas, if a difference between an analysis result by the gas analyzer 17 acquired at the second time and the predictive value of the SO₂ concentration in the effluent gas at the second time reaches, for example, not less than a preset threshold after the first relationship table is created, and may recreate the first relationship table by using the reconstructed first learning model. Thus, it is possible to obtain the first relationship table further improved in predictive performance of the future SO₂ concentration.

Moreover, in the configuration of FIG. 7, some sort of abnormality may be occurring in a process, if the difference between the analysis result by the gas analyzer 17 acquired at the second time and the predictive value of the SO₂ concentration in the effluent gas at the second time reaches not less than the preset threshold after the first relationship table is created. In this case, it is possible to early detect the abnormality in the process by displaying a warning or the like informing the possibility of the abnormality on, for example, the remote monitoring device 43 (see FIG. 2).

In the present embodiment, CaCO₃ is used as the SO₂ absorbent. However, the SO₂ absorbent is not limited to CaCO₃. As the SO₂ absorbent, for example, magnesium hydroxide (Mg(OH)2) or the like can also be used.

### Reference Signs List

- 1: Combustion device
- 2: Pipe
- 3: Circulation pipe
- 10: Wet flue gas desulfurization device
- 11: Absorption tower
- 12a: Circulation pump
- 12b: Circulation pump
- 12c: Circulation pump
- 13: Absorbent slurry supply part
- 14: Gypsum recovery part
- 15: Control device
- 16: Outflow pipe
- 17: Gas analyzer
- 21: Absorbent slurry production equipment
- 22: Absorbent slurry supply pipe
- 23: Absorbent slurry supply amount control valve
- 25: Gypsum separator
- 26: Gypsum slurry extraction pipe
- 27: Gypsum slurry extraction pump
- 30: Operation data reception unit
- 31: First relationship table creation unit
- 32: Circulation flow rate decision unit
- 33: Circulation pump adjustment unit
- 34: Comparison unit
- 35: Second relationship table creation unit
- 36: Absorbent slurry supply amount decision unit
- 37: Absorbent slurry supply control unit
- 38: First learning model construction unit
- 39: Second learning model construction unit
- 40: Remote monitoring system
- 41: Distributed control system (DCS)
- 42: Edge server
- 43: Remote monitoring device

## Claims

1. A method for controlling a wet flue gas desulfurization device including:
an absorption tower; and
at least one circulation pump for circulating an absorption liquid in the absorption tower, and
performing desulfurization by bringing the absorption liquid into gas-liquid contact with an exhaust gas generated in a combustion device, in the absorption tower, the method comprising:
a step of constructing a first learning model by machine learning of a relationship between a future sulfur dioxide concentration at an outlet of the absorption tower, and operation data of the combustion device and operation data of the wet flue gas desulfurization device including a circulation flow rate of the absorption liquid;
a step of creating, by using the first learning model, a first relationship table between a circulation flow rate of the absorption liquid at first time and a sulfur dioxide concentration in an effluent gas flowing out of the absorption tower at second time which is time in the future relative to the first time;
a step of deciding, based on the first relationship table, the circulation flow rate of the absorption liquid at the first time, at which the sulfur dioxide concentration in the effluent gas at the second time is not more than a preset set value; and
a step of adjusting an operation condition of the at least one circulation pump based on the decided circulation flow rate, at the first time.

2. The method for controlling the wet flue gas desulfurization device according to claim 1,
wherein the operation data of the wet flue gas desulfurization device including the circulation flow rate of the absorption liquid includes:
a sulfur dioxide concentration in the effluent gas at any time; and
a circulation flow rate of the absorption liquid at time in the past relative to the any time by a time interval obtained by subtracting the first time from the second time.

3. The method for controlling the wet flue gas desulfurization device according to claim 1 or 2,
wherein the wet flue gas desulfurization device further includes a gas analyzer for measuring the sulfur dioxide concentration in the effluent gas, and
wherein the method further includes a step of comparing an analysis result by the gas analyzer acquired at the second time with a predictive value of the sulfur dioxide concentration in the effluent gas at the second time.

4. The method for controlling the wet flue gas desulfurization device according to claim 3, further comprising:
after creating the first relationship table, a step of reconstructing, based on a difference between the analysis result and the predictive value of the sulfur dioxide concentration in the effluent gas, the first learning model by machine learning of the relationship between the future sulfur dioxide concentration at the outlet of the absorption tower, and the operation data of the combustion device and the operation data of the wet flue gas desulfurization device including the circulation flow rate of the absorption liquid, and creating the first relationship table by using the reconstructed first learning model.

5. The method for controlling the wet flue gas desulfurization device according to any one of claims 1 to 4,
wherein the wet flue gas desulfurization device further includes an absorbent slurry supply part for supplying, to the absorption tower, an absorbent slurry which is a slurry of an absorbent included in the absorption liquid, and
wherein the method further includes:
a step of constructing a second learning model by machine learning of a relationship between a future absorbent concentration, and the operation data of the combustion device and the operation data of the wet flue gas desulfurization device including the circulation flow rate of the absorption liquid;
a step of creating, by using the second learning model, a second relationship table between a supply amount of the absorbent slurry to the absorption tower at third time and a concentration of the absorbent in the absorption liquid at fourth time which is time in future relative to the third time;
a step of deciding, based on the second relationship table, the supply amount of the absorbent slurry at the third time, in which the concentration of the absorbent at the fourth time falls within a preset setting range; and
a step of controlling the absorbent slurry supply part based on the decided supply amount of the absorbent slurry, at the third time.

6. The method for controlling the wet flue gas desulfurization device according to claim 5,
wherein the operation data of the wet flue gas desulfurization device including the circulation flow rate of the absorption liquid includes:
a concentration of the absorbent at any time; and
a supply amount of the absorbent slurry at time in the past relative to the any time by a time interval obtained by subtracting the third time from the fourth time.

7. The method for controlling the wet flue gas desulfurization device according to claim 6,
wherein the concentration of the absorbent is calculated with a simulation model by mass balance calculation.

8. The method for controlling the wet flue gas desulfurization device according to any one of claims 5 to 7,
wherein an interval from the third time to the fourth time is shorter than an interval from the first time to the second time.

9. A device for controlling a wet flue gas desulfurization device including:
an absorption tower; and
at least one circulation pump for circulating an absorption liquid in the absorption tower, and
performing desulfurization by bringing the absorption liquid into gas-liquid contact with an exhaust gas generated in a combustion device, in the absorption tower, the device comprising:
a first learning model construction unit for constructing a learning model by machine learning of a relationship between a future sulfur dioxide concentration at an outlet of the absorption tower, and operation data of the combustion device and operation data of the wet flue gas desulfurization device including a circulation flow rate of the absorption liquid;
a first relationship table creation unit for creating, by using the learning model, a first relationship table between a circulation flow rate of the absorption liquid at first time and a sulfur dioxide concentration in an effluent gas flowing out of the absorption tower at second time which is time in the future relative to the first time;
a circulation flow rate decision unit for deciding, based on the first relationship table, the circulation flow rate of the absorption liquid at the first time, at which the sulfur dioxide concentration in the effluent gas at the second time is not more than a preset set value; and
a circulation pump adjustment unit for adjusting an operation condition of the at least one circulation pump based on the decided circulation flow rate, at the first time.

10. The device for controlling the wet flue gas desulfurization device according to claim 9,
wherein the wet flue gas desulfurization device further includes an absorbent slurry supply part for supplying, to the absorption tower, an absorbent slurry which is a slurry of an absorbent included in the absorption liquid, and
wherein the device further includes:
a second learning model construction unit for constructing a second learning model by machine learning of a relationship between a future absorbent concentration, and the operation data of the combustion device and the operation data of the wet flue gas desulfurization device including the circulation flow rate of the absorption liquid;
a second relationship table creation unit for creating, by using the second learning model, a second relationship table between a supply amount of the absorbent slurry to the absorption tower at third time and a concentration of the absorbent in the absorption liquid at fourth time which is time in future relative to the third time;
an absorbent slurry supply amount decision unit for deciding, based on the second relationship table, the supply amount of the absorbent slurry at the third time, in which the concentration of the absorbent at the fourth time falls within a preset setting range; and
an absorbent slurry supply control unit for controlling the absorbent slurry supply part based on the decided supply amount of the absorbent slurry, at the third time.

11. A remote monitoring system, comprising:
the device for controlling the wet flue gas desulfurization device according to claim 9 or 10; and
a remote monitoring device electrically connected to the device for controlling the wet flue gas desulfurization device.
